# EUROPÄISCHE PATENTSCHRIFT

(11) **EP 2 548 763 B1**
(45) Veröffentlichungstag und Bekanntmachung des Hinweises auf die Patenterteilung: **12.08.2015**
(21) Anmeldenummer: 12174161.5
(22) Anmeldetag: 28.06.2012
(51) Int. Cl.: B60N 2/66, B60N 2/22, B61D 33/00

(54) **Fahrzeugsitz mit Rückenlehnenverformung**
Vehicle seat with backrest deformation
Siège de véhicule doté d'une déformation de dossier

(30) Priorität: 19.07.2011 DE 102011107927
(43) Veröffentlichungstag der Anmeldung: 23.01.2013
(73) Patentinhaber: GRAMMER AG, 92224 Amberg (DE)
(72) Erfinder: Meiller, Hermann, 92533 Wernberg-Köblitz (DE)
(74) Vertreter: Hannke, Christian

(56) Entgegenhaltungen:
- EP-A2- 1 712 410
- EP-A2- 2 301 795
- DE-U1- 29 619 129
- DE-U1-202009 006 701
- FR-A5- 2 088 851
- US-A- 5 505 520

## Beschreibung

Die Erfindung betrifft einen Fahrzeugsitz, insbesondere einen Schienenfahrzeugsitz, mit einem Grundrahmen, einem Sitzteil und einer Rückenlehne, wobei das Sitzteil einen Sitzpolsterflächenanteil und die Rückenlehne einen im oberen Bereich mit dem Grundrahmen fest verbundenen Rückenlehnenpolsterflächenanteil aufweist, gemäß dem Oberbegriff des Patentanspruches 1.

Fahrzeugsitze, insbesondere im Bereich der Bahnsitze für Schienenfahrzeuge bzw. Waggons, weisen häufig das Problem auf, dass die hinter einem Sitz sitzende weitere Person sich durch das Nach-hinten-Neigen einer Rückenlehne des davorliegenden Fahrzeugsitzes gestört fühlt, da es hierdurch eine Beeinträchtigung des zur Verfügung stehenden Raumes für die Beine der Person gibt. Zugleich besteht jedoch der Wunsch, eine Rückenlehnenneigung der den Fahrzeugsitz benutzenden Person zur Verfügung zu stellen, die innerhalb gewisser Grenzen verstellbar ist. Hierfür ist beispielsweise für die Fahrzeugsitze der 1. Klasse der Deutschen Bahn eine Rückenlehnenneigung von mindestens 38°gegenüber der Vertikalen und für die Fahrzeugsitze der 2. Klasse von mindestens 32° gegenüber der Vertikalen gefordert.

Die Druckschrift DE 20 2009 006 701 U1 beschreibt ein Sitzmöbel, dessen Sitzteil und Rückenlehnenteil gleichzeitig miteinander von einer ersten Sitzposition in eine zweite Relaxposition überführbar sind, wobei in der zweiten Position der Lendenwirbelbereich des Benutzers durch eine am unteren Ende der Rückenlehne angeordnete Lordosestütze in Form eines Polsterkörperteils aktiv unterstützt wird. Die Ausbildung der Lordosestütze wird hier allerdings mittels einer äußerst aufwändigen und kostenintensiven Mechanik aus miteinander verbundenen Hebelarmen und Platten ermöglicht. Die FR 2 088 851 offenbart einen Fahrzeugsitz mit einem Grundrahmen, einem Sitzteil und einer Rückenlehne, wobei das Sitzteil einen Sitzpolstertflächenanteil und die Rückenlehne einen im oberen Bereich mit dem Grundrahmen fest verbundenen Rückenlehnenpolsterflächenanteil aufweist.

Demzufolge ist es Aufgabe der Erfindung, einen Fahrzeugsitz, insbesondere für Schienenfahrzeuge, zur Verfügung zu stellen, der eine Rückenlehnenneigungsverstellung und somit ein komfortableres Sitzen der den Fahrzeugsitz benutzenden Person zur Verfügung stellt, ohne dass die hinter dem Fahrzeugsitz sitzende Person hierdurch in ihrer Raumfreiheit beeinträchtig wird. Außerdem soll die Rückenlehnenneigungsverstellung mittels einer einfach gestalteten Mechanik realisiert werden können, um die Gesamtkosten des Aufbaus zu senken.

Diese Aufgabe wird gemäß den Merkmalen des Patentanspruches 1 gelöst.

Ein wesentlicher Punkt der Erfindung liegt darin, dass bei einem Fahrzeugsitz, insbesondere einem Schienenfahrzeugsitz, mit einem Grundrahmen, der sich sowohl im Rückenlehnenbereich als auch im Sitzteilbereich erstreckt, einem Sitzteil und einer Rückenlehne, wobei das Sitzteil einen Sitzpolsterflächenanteil und die Rückenlehne einen im oberen Bereich mit dem Grundrahmen fest verbundenen Rückenlehnenpolsterflächenanteil aufweist, ein sich im mittleren Bereich nach oben erstreckendes bügelartiges Element vorhanden ist, welches in seinen Endbereichen an dem Grundrahmen in dessen unteren Bereich um eine im Wesentlichen horizontal ausgerichtete Schwenkachse schwenkbar gelagert ist und, in Sitzteillängsrichtung betrachtet, derart in Vorwärtsrichtung verschwenkbar ist, dass der Rückenlehnenpolsterflächenanteil zumindest im Bereich der unteren Hälfte in Vorwärtsrichtung gedrückt wird, wobei der Flächenanteil des Rückenpolsters in einem unteren Bereich von dem Grundrahmen loslösbar ist. Durch eine derartige Anordnung eines bügelartigen Elementes wird vorteilhaft erreicht, dass der Rückenlehnenpolsterflächenanteil im unteren Bereich nach vorne geschoben wird, sofern das bügelartige Element zwischen dem Rückenlehnenpolsterflächenanteil und einer rückwärtigen Wand der Rückenlehne angeordnet ist und somit allein durch das Verschieben des Rückenlehnenpolsterflächenanteiles im unteren Bereich eine Verstellung der Neigung des Rückenpolsters bzw. Rückenlehnenpolsterflächenanteiles erreicht wird.

Zugleich bleibt der eigentliche Grundrahmen auch im Bereich der Rückenlehne in seiner Neigungsverstellung unverändert, welches bewirkt, dass die Rückenlehne in Bezug auf die hinter diesem Fahrzeugsitz sitzende Person nicht verstellt wird und somit keine Beeinträchtigung der Raumfreiheit dieser dahintersitzenden Person stattfindet. Vielmehr wird lediglich das Rückenlehnenpolster bzw. der Rückenlehnenpolsterflächenanteil von einem Fahrzeugsitzpolster, welches sich auch über das Sitzteil hinweg erstrecken kann, in dessen unteren Bereich durch das bügelartige Element derart nach vorne gedrückt, dass hierfür bereits eine geringe Schwenkbewegung des sich nach oben erstreckenden bügelartigen Elementes in Vorwärtsrichtung ausreicht.

Sofern das bügelartige Element beispielsweise bogenförmig, also in einem nach oben verlaufenden Bogen mit einem Maximum im mittleren Bereich, oder beispielsweise trapezförmig mit einem maximalen Bereich ebenso im mittleren Bereich des bügelartigen Elementes ausgebildet ist, kann durch ein Verschwenken des bügelartigen Elementes nicht nur eine Verformung des Rückenlehnenpolsterflächenanteiles in Vorwärtsrichtung, sondern auch eine Verformung des Rückenlehnenpolsterflächenanteiles in seinem unteren Bereich in Breitenrichtung erreicht werden. Denn ein Verschwenken eines bogenförmigen Elementes nach vorne bewirkt eine Veränderung eines von oben betrachteten konvexgeformten Querschnittes des Rückenlehnenpolsterflächenelementes, und zwar in Breitenrichtung derart, dass das Rückenlehnenpolster im mittleren Bereich des bogenförmigen Elementes mehr nach vorne verschoben wird als im randseitigen Bereich bzw. in dessen Endbereichen. Hierdurch wird eine verstärkte Unterstützung der Wirbelsäule, unter anderem auch im Lendenwirbelbereich, und somit ein erhöhter Sitzkomfort für die diesen Sitz benutzende Person erhalten.

Vorteilhaft weist ein derartiger erfindungsgemäßer Fahrzeugsitz mindestens ein Mitnehmerelement, jedoch vorzugsweise zwei Mitnehmerelemente auf, welches mit einem Abschnitt des bügelartigen Elementes in Kontakt ist und in Vorwärts- und Rückwärtsrichtung verschiebbar ist. Dieses Mitnehmerelement ist mit dem Sitzteil, welches ebenso gegenüber dem Grundrahmen in Vorwärts- und Rückwärtsrichtung verschiebbar ist, verbunden und wird durch ein Verschieben des Sitzteiles, welches von der den Sitz benutzenden Person eingeleitet wird, gleichzeitig nach vorne verschoben und führt somit zeitgleich zu einer Schwenkbewegung des bügelartigen Elementes in der gewünschten Vorwärtsrichtung. Selbstverständlich wird diese Bewegung bei einer Rückwärtsbewegung des Sitzteiles und damit einer Rückwärtsbewegung des Mitnehmerteiles wieder rückgängig gemacht. Auf diese Art und Weise kann mit einem Nach-vorne-Verschieben des Sitzteiles, welches das Aufrechterhalten der gesamten Sitzfläche bei einem nach vorne drückenden Rückenlehnenpolsterflächenelement ermöglicht, eine Neigung der Rückenlehne bzw. des Rückenlehnenpolsterflächenanteiles erreicht werden.

Bevorzugt stellen das Mitnehmerelement und ein weiteres Mitnehmerelement ein Winkelelement dar, deren erster Schenkel mit dem verschiebbaren Sitzteil verbunden ist und vorzugsweise an der Unterseite des Sitzteiles befestigt ist, und deren zweiter Schenkel im Bezug auf den mittleren Bereich linksseitig einen ersten Abschnitt und rechtsseitig einen zweiten Abschnitt des bügelartigen Elementes hintergreift. Ein derartiges Hintergreifen kann so aussehen, dass beispielsweise das als Flacheisen ausgebildete Winkelelement das bügelartige Element von der rückwärtigen Seite aus kontaktiert und für eine Schwenkbewegung während des Nach-vorne-Verschiebens des Mitnehmerelementes und des Sitzteiles einfach mitzieht.

Gemäß einer bevorzugten Ausführungsform sind der erste und der zweite Abschnitt des bügelartigen Elementes unmittelbar benachbart zu den Endbereichen des bügelartigen Elementes angeordnet. Hierdurch kann erreicht werden, dass bereits durch eine geringfügige Verschiebung des Mitnehmerelementes und des Sitzteiles eine relativ große Schwenkbewegung des bügelartigen Elementes, welches vorzugweise bogenförmig ist, durchgeführt wird. Eine derartige Schwenkbewegung würde bei einer gleichgroßen Verschiebebewegung des Mitnehmerelementes nicht in diesem Ausmaße stattfinden, wenn das Mitnehmerelement und damit die Abschnitte des bügelartigen Elementes, an dem die Mitnehmerelemente angreifen, im mittleren Bereich des bogenförmigen Bügels bzw. bügelartigen Elementes ansetzen würden. Demzufolge ist es gewünscht, die besagten Abschnitte möglichst nah an den Endbereichen des bügelartigen Elementes, die eine geringe Entfernung zu den Schwenklagerungen des bügelartigen Elementes aufweisen, anzusetzen.

Gemäß einer bevorzugten Ausführungsform sind mindestens zwei sich in Längsrichtung der Rückenlehne erstreckende plattenartige Elemente angeordnet, die zwischen dem bügelartigen Element und dem Rückenlehnenpolsterflächenanteil angeordnet sind und zumindest in ihrem oberen Endbereich zumindest indirekt am Grundrahmen im Bereich der Rückenlehne fixiert sind.

Zusätzlich können sich die plattenartigen Elemente in ihrem unteren Bereich bis zum Sitzteil erstrecken und der untere Bereich des Sitzteils ebenso in Vorwärts- und Rückwärtsrichtung verschiebbar sein. Dies bedeutet, dass der Rückenpolsterflächenanteil nicht durch den Bügel eine örtlich begrenzte ungewollte Ausbuchtung erhält, sondern eine flächige Wölbung des Rückenlehnenpolsterflächenanteiles im unteren Bereich bei Verschwenken des bügelartigen Elementes erhalten wird.

Selbstverständlich können die plattenartigen Elemente derart geformt sein, dass sie den Flächenverlauf des Rückenlehnenpolsterflächenanteiles im unteren Bereich bei verstellter oder unverstellter Stellung des bügelartigen Elementes wesentlich in Sitzbreitenrichtung und Rückenlehnenlängsrichtung mitbestimmen und somit ein erhöhter Sitzkomfort der den Fahrzeugsitz benutzenden Person zur Verfügung steht.

Vorzugsweise sind die plattenartigen Elemente aus einem flexiblen oder einem steifen Material, wie ein Kunststoff- und/oder Blechmaterial.

Gemäß einer bevorzugten Ausführungsform ist die Position der Schwenklagerung der Endbereiche des bügelartigen Elementes durch Einsetzen der Endbereiche in anderen Ausnehmungen und/oder Bohrungen innerhalb des Grundrahmens oder durch eine am Grundrahmen angebrachte Verschiebeeinrichtung veränderbar. Dies ermöglicht, dass individuell für jede Person abhängig von ihrer Größe, ihrer Rückenform und weiteren Parametern eine unterschiedliche Verstellung des Rückenlehnenpolsterflächenanteiles erreicht wird, wie beispielsweise ein weiter nach vorne gedrückter Rückenlehnenpolsterflächenanteil und somit eine stärkere Neigung des gesamten Rückenpolsters und damit der Rückenlehne. Auch kann durch eine derartige Verstellung bzw. Verschiebung der Endbereiche des bügelartigen Elementes eine Veränderung der Position des bügelartigen Elementes in Höhenrichtung erreicht werden, indem die Bohrungen in dem Grundrahmen beispielsweise im unteren Bereich der Rückenlehne übereinander angeordnet sind. Dies ermöglicht eine individuelle Anpassung der Rückenlehnenverstellung bzw. der Verstellung des Rückenlehnenpolsterflächenanteiles an die unterschiedlich großen Personen.

Weitere bevorzugte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung einen erfindungsgemäßen Fahrzeugsitz gemäß einer Ausführungsform der Erfindung in einer Seitendarstellung, einer rückwärtigen bzw. transparenten Darstellung in einer Draufsicht, wobei der Fahrzeugsitz einer ersten Verstellposition verstellt ist;
- Fig. 2: der in Fig.1 dargestellte Fahrzeugsitz in einer breiten Verstellposition in einer Seitendarstellung und einer Draufsicht;
- Fig. 3: in einer perspektivischen Darstellung den erfindungsgemäßen Fahrzeugsitz gemäß Fig. 1 und Fig. 2 in einer ersten Verstellposition;
- Fig. 4: den in Fig. 3 gezeichnet Fahrzeugsitz in einer zweiten Verstellposition.

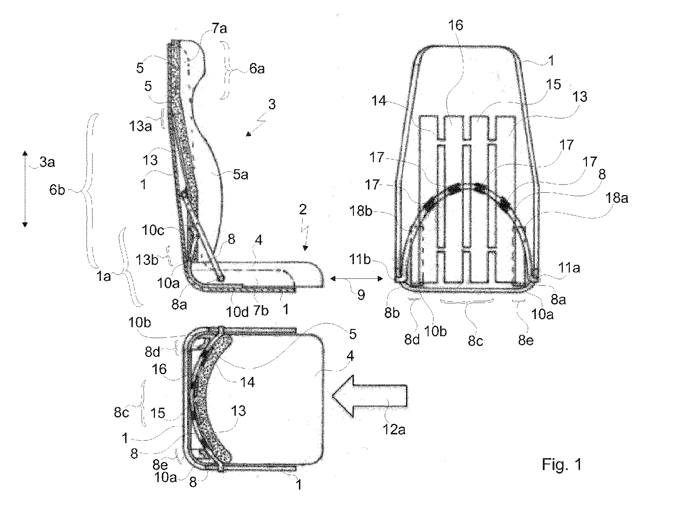

In Fig. 1 wird in einer Seitendarstellung, einer teilweisen transparenten rückseitigen Darstellung und in einer Draufsicht eine erste Verstellposition des erfindungsgemäßen Fahrzeugsitzes gemäß einer Ausführungsform wiedergegeben.

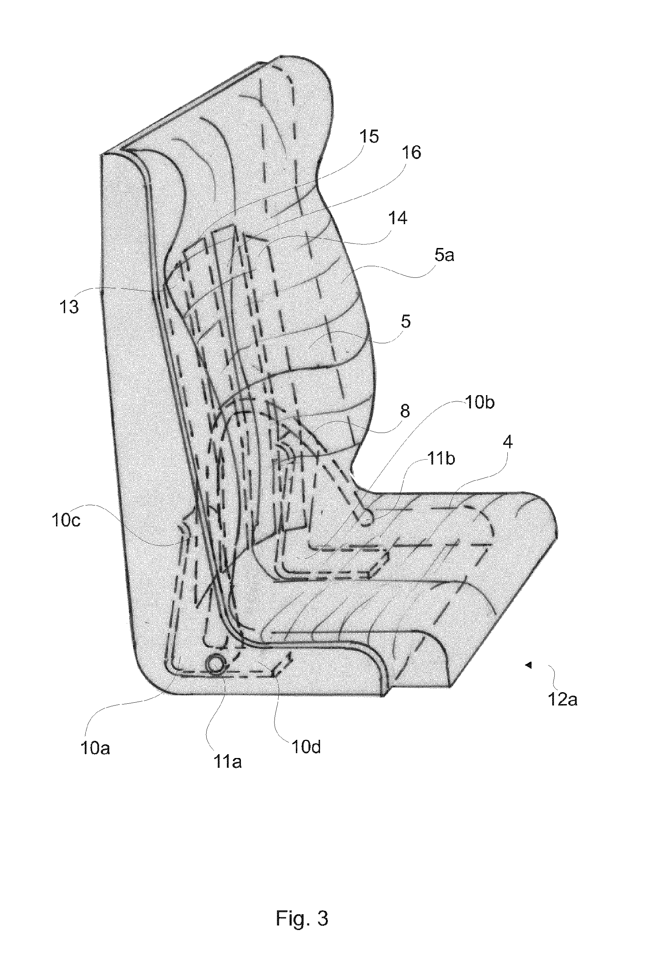

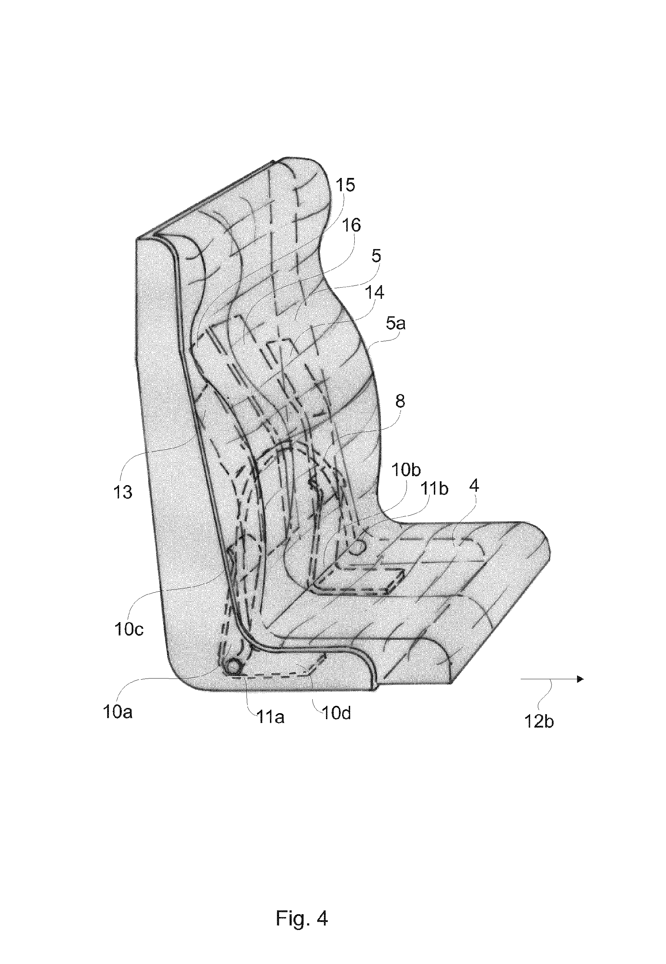

Der Fahrzeugsitz umfasst ein Sitzteil 2 und eine Rückenlehne 3, wobei das Sitzteil 2 einen Sitzpolsterflächenanteil 4 und die Rückenlehne 3 einen Rückenlehnenpolsterflächenanteil 5 zusammen mit seitlich sich nach vorne erstreckenden Anteilen 5a, wie es im Übrigen auch aus Fig. 3 und Fig. 4 ersichtlich ist, aufweisen.

Der Rückenlehnenpolsterflächenanteil 5 ist in seinem oberen Bereich 6a fest mit einem Grundrahmen 1, der sich sowohl im Rückenlehnenbereich als auch im Sitzteilbereich erstreckt, zumindest indirekt verbunden, so dass in diesem Bereich keine Loslösung des Rückenlehnenpolsteranteiles von dem unveränderbaren Grundrahmen möglich ist. Der Grundrahmen selber weist die in der Seitendarstellung wiedergegebene Winkelform unverändert auf, unabhängig davon, ob der Fahrzeugsitz eine veränderte Verstellposition einnimmt oder nicht.

In einem unteren Bereich 6b ist der Rückenlehnenpolsterflächenanteil 5 erfindungsgemäß von dem Grundrahmen 1 loslösbar, und zwar in Vorwärtsrichtung unter Bezugnahme auf die Fahrzeugsitzlängsrichtung 9 bzw. die Längsrichtung des Sitzteiles 2.

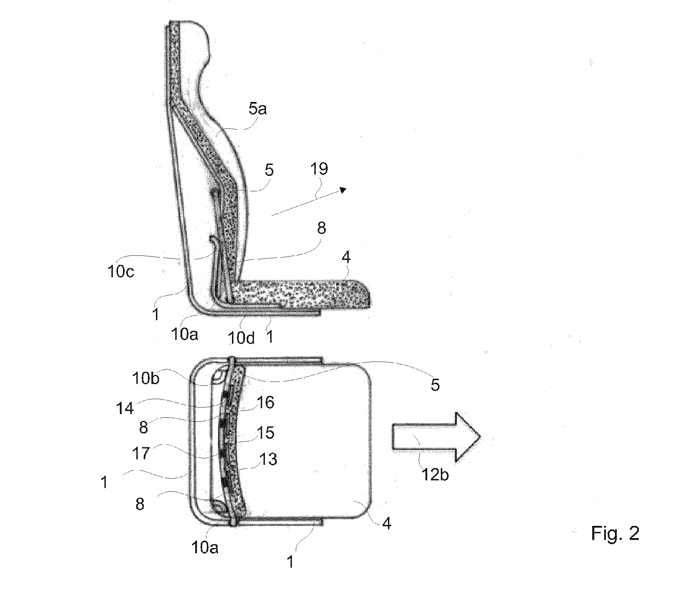

Der Grundrahmen 1 ist zusätzlich mit seitlichen schalenartigen Elementen 7a im Rückenlehnenbereich und 7b im Sitzteilbereich ausgestattet. Vorteilhaft kann in dem schalenartigen Seitenbereich 7b des Grundrahmens eine Schwenklagerung bzw. eine Bohrung 11a, b sowohl auf der linken, als auch auf der rechten Seite existieren, um die Endbereiche 8a, 8b eines bügelartigen Elementes 8, welches bogenförmig ausgebildet ist und ein Maximum in einem mittleren Bereich 8c aufweist, aufzunehmen. Durch die Aufnahme derartiger Endbereiche 8a, 8b durch einfaches Einstecken dieser Endbereiche in die Bohrungen 11a, 11b wird erreicht, dass das bogenförmige Element 8 auf einfache Art und Weise schwenkbar gelagert ist und eine Schwenkbewegung gemäß Bezugszeichen 19, wie in Fig. 2 gezeigt, durchführen kann.

Das bogenförmige Element 8 ist demzufolge in seinem oberen Bereich frei schwenkbar und ist zwischen Rückenlehnenpolsteranteil 5 und einer rückwärtigen Wand, die zu dem Grundrahmen 1 gehört oder mit diesem verbunden ist, angeordnet.

Zwischen dem Rückenlehnenpolsteranteil 5 und dem bogenförmigen Element 8 ist zusätzlich mindestens ein plattenartiges Element 13, jedoch bevorzugt mehrere plattenartige Elemente 13, 14, 15 und 16, die auch miteinander verbunden sein können und gegebenenfalls flexibel ausgestattet sein können, angeordnet. Diese plattenartigen Elemente ermöglichen durch ihre Längserstreckung in Längsrichtung 3a der Rückenlehne 3 einen fließenden Übergang mit einer gewünschten Flächenform, wenn das bügelartige Element nach vorne verschwenkt wird, wie es gemäß Bezugszeichen 19 in Fig. 2 dargestellt ist.

Mitnehmerelemente 10a und 10b sind beidseitig, also links- und rechtsseitig in vorgebbaren Abschnitten 8d und 8e des bügelartigen Elementes 8 derart angeordnet, dass sie mit bevorzugt ihrem oberen Endbereich das bügelartige Element hintergreifen und bei einer Verschiebung des Mitnehmerelementes in Vorwärtsrichtung 12b dieses bügelartige Element 8 für eine Schwenkbewegung 19 mitnehmen.

Hierfür sind die Mitnehmerelemente 10a und 10b winkelartig ausgebildet und weisen jeweils einen oberen Schenkel 10c auf, der das bügelartige Element in den Abschnitten 8d und 8e an den Punkten 18a und 18b kontaktiert und somit hintergreift. Zudem weisen sie einen weiteren Schenkel 10d auf, der mit dem Sitzteil 2 bevorzugt an dessen Unterseite verbunden ist, und so mit einer möglichen Verschiebung des Sitzteiles 2 in Vorwärts- und Rückwärtsrichtung 12b, 12a mitgenommen werden und hierdurch die Schwenkbewegung des bügelartigen Elementes 8 bewirken.

Das bügelartige Element ist zusätzlich mit Oberflächengleitflächen ausgestattet, die ein Entlanggleiten des bügelartigen Elementes 8 an den zumindest oberseitig fixierten plattenartigen Elementen 13-16 zur Verhinderung einer Materialabnutzung und zur Verringerung eines Reibungswiderstandes ermöglichen.

Wird nun das Sitzteil 2, welches gegenüber dem Grundrahmen 1 verschiebbar gemäß dem Bezugszeichen 9 ausgebildet ist, verschoben, so werden auch die Mitnehmerelemente 10a und 10b verschoben. Bei einer nach vorwärts gerichteten Verschiebebewegung 12b, wie sie in Fig. 2 gemäß einer weiteren Verstellposition des Fahrzeugsitzes dargestellt ist, werden somit die Mitnehmerelemente 10a und 10b so nach vorne verschoben und der Schenkel 10c eines jeden Mitnehmerelementes zieht damit auch das schwenkbare bügelartige Element 8 in seinem oberen Bereich nach vorne. Dies bewirkt eine Vorwärtsbewegung des im unteren Bereich lose vorliegenden Rückenlehnenpolsterflächenanteiles 5 und zugleich eine gewisse Auswölbung des Rückenlehnenpolsterflächenanteiles 5. Dies führt zu einer gewünschten erhöhten Neigungsverstellung des Rückenpolsters, wobei auch weiterhin der gesamte Anteil der Sitzfläche des Sitzteiles 4 zur Verfügung steht, da das Sitzteil ebenso nach vorne verschoben worden ist.

Die plattenartigen Elemente 13 bewirken durch ihre Fixierung in ihrem oberen Bereich 13a an dem Grundrahmen 1 einen fließenden Übergang zu dem nach vorne geneigten bügelartigen Element 8 in seinem oberen Bereich und weitergehend in dem unteren Bereich 13b der plattenartigen Elemente, die in diesem Bereich bis zu dem Sitzteil 4 sich erstrecken und ebenso mit nach vorne verschoben werden.

Sofern das Sitzteil 2, gemäß dem Pfeil 12a, wieder zurückgeschoben wird, wird das bügelartige Element ebenso wieder nach hinten verschwenkt und somit nimmt der Rückenlehnenpolsteranteil 5 seine ursprüngliche Neigungsstellung, wie in Fig. 1 gezeigt, wieder ein.

Selbstverständlich kann das bügelartige Element 8 auch federbeaufschlagt derart sein, dass es bei einer rückwärts- und/oder vorwärtsgerichteten Bewegung eine federunterstützende Kraft für die Bewegung erfährt.

Bei einem Vergleich den Darstellungen gemäß Fig. 3 und Fig. 4, wobei Fig. 3 der Position des Fahrzeugsitzes gemäß Fig. 1 und Fig. 4 der Position des Fahrzeugsitzes gemäß Fig. 2 entspricht, wird deutlich, dass die bogenförmige Ausbildung des bügelartigen Elementes 8 bei einer vorwärtsgerichteten Bewegung dieses Elementes nicht nur eine Verformung der Rückenlehne in Vorwärtsrichtung, sondern auch eine Verformung in Breitenrichtung der Rückenlehne stattfindet. Denn in Fig. 4 ist zu sehen, dass aufgrund der stärkeren Auslenkung des mittleren Bereiches 8c des bügelartigen Elementes im mittleren Bereich des Rückenlehnenpolsters eine stärkere Wölbung nach vorne erhalten wird und somit eine anfangs stark konvex ausgebildete Querschnittform des Rückenlehnenpolsters in diesem Be reich zu einer weniger konvex ausgebildeten Querschnittform übergeht. Dies wird auch durch einen Vergleich der Draufsichten aus den Figuren 1 und 2 bei Betrachtung des Verlaufs des Rückenlehnenpolsterflächenanteiles 5 und der plattenartigen Elemente 13,14,15 und 16 sowie des bügelartigen Elementes 8 deutlich.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Grundrahmen
- 2: Sitzteil
- 3: Rückenlehne
- 3a: Längsrichtung der Rückenlehne
- 4: Sitzpolsterflächenanteil
- 5: Rückenlehnenpolsterflächenanteil
- 5a: sich nach vorne erstreckende Anteile
- 6a: oberer Bereich des Rückenpolsterflächenanteils
- 6b: unterer Bereich des Rückenpolsterflächenanteils
- 7a: seitliche schalenartige Elemente im Rückenlehnenbereich
- 7b: seitliche schalenartige Elemente im Sitzteilbereich
- 8: bügelartiges/bogenförmiges/schwenkbares Element
- 8a: Endbereich des bügelartigen Elementes
- 8b: Endbereich des bügelartigen Elementes
- 8c: mittlerer Bereich des bügelartigen Elementes
- 9: verschiebbares Sitzteil
- 10a: Mitnehmerelement
- 10b: Mitnehmerelement
- 10c: oberer Schenkel
- 10d: weiterer Schenkel
- 11a: Bohrung
- 11b: Bohrung
- 12a: Vorwärts- und Rückwärtsrichtung
- 12b: Vorwärts- und Rückwärtsrichtung/Verschiebebewegung
- 13: oberseitig fixiertes plattenartiges Element
- 13a: oberer Bereich des plattenartigen Elementes
- 14: oberseitig fixiertes plattenartiges Element
- 15: oberseitig fixiertes plattenartiges Element
- 16: oberseitig fixiertes plattenartiges Element
- 19: Schwenkbewegung

## Patentansprüche

1. Fahrzeugsitz, insbesondere Schienenfahrzeugsitz, mit einem Grundrahmen (1), der sich sowohl im Rückenlehnenbereich als auch im Sitzteilbereich erstreckt, einem Sitzteil (2) und einer Rückenlehne (3), wobei das Sitzteil (2) einen Sitzpolsterflächenanteil (4) und die Rückenlehne (3) einen im oberen Bereich (6a) mit dem Grundrahmen (1) fest verbundenen Rückenlehnenpolsterflächenanteil (5, 5a) aufweist, mit einem sich im mittleren Bereich (8c) nach oben erstreckenden bügelartigen Element (8), welches in seinen Endbereichen (8a, 8b) an dem Grundrahmen (1) in dessen unteren Bereich (1a) um eine im Wesentlichen horizontal verlaufende Schwenkachse schwenkbar gelagert ist, und in Sitzteillängsrichtung (9) betrachtet, derart in Vorwärtsrichtung (12b) verschwenkbar (19) ist, dass der Rückenlehnenpolsterflächenanteil (5) zumindest im Bereich der unteren Hälfte (6b) in Vorwärtsrichtung (12b) gedrückt wird, wobei der Rückenlehnenpolsterflächenanteil (5) in einem unteren Bereich (6b) von dem Grundrahmen (1) in Vorwärtsrichtung (12b) loslösbar ist.

2. Fahrzeugsitz nach Anspruch 1,
**gekennzeichnet durch**
mindestens ein Mitnehmerelement (10a, 10b), welches mit einem Abschnitt (8d, 8e) des bügelartigen Elementes (8) in Kontakt ist und in Vorwärts- und Rückwärtsrichtung (12b, 12a) verschiebbar ist.

3. Fahrzeugsitz nach Anspruch 2,
**dadurch gekennzeichnet, dass**
das Sitzteil (2) gegenüber dem Grundrahmen (1) in Vorwärts- und Rückwärtsrichtung (12b, 12a) verschiebbar ist und mit dem Mitnehmerelement (10a, 10b) verbunden ist.

4. Fahrzeugsitz nach Anspruch 2 oder 3,
**dadurch gekennzeichnet, dass**
das Mitnehmerelement und ein weiteres Mitnehmerelement jeweils ein Winkelelement (10a, 10b) darstellt, dessen erster Schenkel (10d) mit dem verschiebbaren Sitzteil (2) verbunden ist und dessen zweiter Schenkel (10c) in Bezug auf den mittleren Bereich (8c) linksseitig einen ersten Abschnitt (8d) und rechtsseitig einen zweiten Abschnitt (8e) des bügelartigen Elementes (8) hintergreift.

5. Fahrzeugsitz nach Anspruch 4,
**dadurch gekennzeichnet, dass**
der erste und der zweite Abschnitt (8d, 8e) unmittelbar benachbart zu den Endbereichen (8a, 8b) des bügelartigen Elementes (8) angeordnet sind.

6. Fahrzeugsitz nach einem der vorangegangenen Ansprüche,
**gekennzeichnet durch**
mindestens zwei sich in Längsrichtung (3a) der Rückenlehne (3) erstreckende plattenartige Elemente (13-16), die zwischen dem bügelartigen Element (8) und dem Rückenlehnenpolsterflächenanteil (5) angeordnet sind und zumindest in ihrem oberen Endbereich (13a) zumindest indirekt am Grundrahmen (1) im Bereich der Rückenlehne (3) fixiert sind.

7. Fahrzeugsitz nach Anspruch 6,
**dadurch gekennzeichnet, dass**
sich die plattenartigen Elemente (13-16) in ihrem unteren Bereich (13b) bis zu dem Sitzteil (2) erstrecken und der untere Bereich (13b) bei einer Verschiebung des Sitzteils (2) ebenso in Vorwärts- und Rückwärtsrichtung (12b, 12a) verschiebbar ist.

8. Fahrzeugsitz nach Anspruch 7,
**dadurch gekennzeichnet, dass**
die plattenartigen Elemente (13-16) aus einem flexiblen oder einem steifen Material, wie einem Kunststoff- und/oder Blechmaterial bestehen.

9. Fahrzeugsitz nach einem der vorangegangenen Ansprüche,
**dadurch gekennzeichnet,dass**
die Position der Schwenklagerung (11 a, 11 b) der Endbereiche (8a, 8b) des bügelartigen Elementes (8) durch Einsetzen der Endbereiche (8a, 8b) in andere Ausnehmungen und/oder Bohrungen (11a, 11 b) innerhalb des Grundrahmens (1) oder durch eine am Grundrahmen (1) angebrachte Verschiebeeinrichtung veränderbar ist.

10. Fahrzeugsitz nach einem der vorangegangenen Ansprüche,
**dadurch gekennzeichnet, dass**
das bügelartige Element (8) bogenförmig oder trapezförmig ausgebildet ist.

## Claims

1. Vehicle seat, in particular a seat for a rail vehicle, comprising a base frame (1), which extends in both the backrest region and the seat part region, a seat part (2) and a backrest (3), the seat part (2) having a seat cushion portion (4) and the backrest (3) having a backrest cushion portion (5, 5a), the upper region (6a) of which is rigidly connected to the base frame (1) and which comprises a bracket-like element (8), the central region (8c) of which extends upwards and the end regions (8a, 8b) of which are mounted on the lower region (1a) of the base frame (1) such that said element is pivotally mounted about a substantially horizontal pivot axis, and, when viewed in the seat-part longitudinal direction (9), can be moved (19) in the forward direction (12b) such that at least the lower half (6b) of the backrest cushion portion (5) is pushed in the forward direction (12b), it being possible to release a lower region (6b) of the backrest cushion portion (5) from the base frame (1) in the forward direction (12b).

2. Vehicle seat according to claim 1, **characterised by** at least one driver element (10a, 10b) which is in contact with a portion (8d, 8e) of the bracket-like element (8) and can be moved in both the forward and backward direction (12b, 12a).

3. Vehicle seat according to claim 2, **characterised in that** the seat part (2) can be moved relative to the base frame (1) in both the forward and backward direction (12b, 12a) and is connected to the driver element (10a, 10b).

4. Vehicle seat according to either claim 2 or claim 3, **characterised in that** the driver element and an additional driver element are each an angular element (10a, 10b), the first leg (10d) of which is connected to the movable seat part (2) and the second leg (10c) of which, in relation to the central region (8c), engages on the left-hand side behind a first portion (8d) and on the right-hand side behind a second portion (8e) of the bracket-like element (8).

5. Vehicle seat according to claim 4, **characterised in that** the first and the second portions (8d, 8e) are arranged immediately adjacently to the end regions (8a, 8b) of the bracket-like element (8).

6. Vehicle seat according to any of the preceding claims, **characterised by** at least two board-like elements (13-16) which extend in the longitudinal direction (3a) of the backrest (3) and are arranged between the bracket-like element (8) and the backrest cushion portion (5), and at least the upper end region (13a) of which is fixed at least indirectly to the base frame (1) in the region of the backrest (3).

7. Vehicle seat according to claim 6, **characterised in that** the lower region (13b) of the board-like elements (13-16) extends as far as the seat part (2) and the lower region (13b) can also be moved in both the forward and backward direction (12b, 12a) when the seat part (2) is moved.

8. Vehicle seat according to claim 7, **characterised in that** the board-like elements (13-16) consist of either a flexible or a rigid material, such as a plastics material and/or sheet metal.

9. Vehicle seat according to any of the preceding claims, **characterised in that** the position of the pivot bearing (11 a, 11 b) of the end regions (8a, 8b) of the bracket-like element (8) can be changed by inserting the end regions (8a, 8b) into other recesses and/or holes (11 a, 11 b) in the base frame (1) or by means of a movement device which is attached to the base frame (1).

10. Vehicle seat according to any of the preceding claims, **characterised in that** the bracket-like element (8) is either curved or trapezoidal.

## Revendications

1. Siège de véhicule, en particulier siège pour des véhicules ferroviaires, comportant un cadre de base (1), qui s'étend tant dans la zone du dossier que dans la zone de l'assise, une assise (2) et un dossier (3), l'assise (2) étant munie d'une partie de surface rembourrée (4) et le dossier (3) étant muni d'une partie de surface rembourrée (5, 5a) reliée de manière fixe au cadre de base (1) dans la partie supérieure (6a), un élément (8) en forme d'étrier, qui s'étend vers le haut dans la partie centrale (8c) et qui, dans ses parties d'extrémité (8a, 8b), est montée contre le cadre de base (1) dans la partie inférieure (1 a) de celui-ci de manière à pouvoir pivoter autour d'un axe de pivotement sensiblement horizontal et qui est pivotant (19) dans le sens avant (12b) par référence au sens longitudinal (9) de l'assise, de telle sorte que la partie rembourrée (5) du dossier est comprimée dans le sens avant (12b) au moins dans la zone de la moitié inférieure (6b), la partie rembourrée (5) du dossier, dans une partie inférieure (6b), pouvant être détachée du cadre de base (1) dans le sens avant (12b).

2. Siège de véhicule selon la revendication 1, **caractérisé par** au moins un élément d'entraînement (10a, 10b), qui est en contact avec une portion (8d, 8e) de l'élément (8) en forme d'étrier et qui peut se déplacer vers l'avant et vers l'arrière (12b, 12a).

3. Siège de véhicule selon la revendication 2, **caractérisé en ce que** l'assise (2) peut coulisser par rapport au cadre de base (1) dans le sens avant et arrière (12b, 12a) et est relié à l'élément d'entraînement (10a, 10b).

4. Siège de véhicule selon la revendication 2 ou 3, **caractérisé en ce que** l'élément d'entraînement et un autre élément d'entraînement constituent chacun un élément d'angle (10a, 10b), dont la première branche (10d) est reliée à l'assise (2) mobile et dont la deuxième branche (10c) s'engage, par référence à la partie centrale (8c), du côté gauche derrière une première portion (8d) et du côté droit derrière une deuxième portion (8e) de l'élément (8) en forme d'étrier.

5. Siège de véhicule selon la revendication 4, **caractérisé en ce que** la première et la deuxième portion (8d, 8e) sont disposées de manière directement adjacente aux parties d'extrémité (8a, 8b) de l'élément (8) en forme d'étrier.

6. Siège de véhicule selon l'une quelconque des revendications précédentes, **caractérisé par** au moins deux éléments (13-16) en forme de plaque, qui s'étendent dans le sens longitudinal (3a) du dossier (3) et qui sont disposés entre l'élément (8) en forme d'étrier et la partie de surface rembourrée (5) du dossier et sont fixés, au moins dans leur partie d'extrémité supérieure (13a), au moins indirectement contre le cadre de base (1) dans la zone du dossier (3).

7. Siège de véhicule selon la revendication 6, **caractérisé en ce que** les éléments (13-16) en forme de plaque s'étendent dans leur partie inférieure (13b) jusqu'à l'assise (2), et **en ce que** la partie inférieure (13b) est également apte à coulisser dans le sens vers l'avant et vers l'arrière (12b, 12a) pendant un déplacement de l'assise (2).

8. Siège de véhicule selon la revendication 7, **caractérisé en ce que** les éléments (13-16) en forme de plaque sont réalisés dans un matériau flexible ou dans un matériau rigide, tel qu'une matière plastique et/ou une tôle.

9. Siège de véhicule selon l'une quelconque des revendications précédentes, **caractérisé en ce que** la position du palier de pivotement (11 a, 11 b) des parties d'extrémité (8a, 8b) de l'élément (8) en forme d'étrier peut être modifiée par l'introduction des parties d'extrémité (8a, 8b) dans d'autres évidements et/ou forures (11 a, 11 b) à l'intérieur du cadre de base (1) ou par un dispositif de coulissement monté sur le cadre de base (1).

10. Siège de véhicule selon l'une quelconque des revendications précédentes, **caractérisé en ce que** l'élément (8) en forme d'étrier est réalisé avec une forme courbe ou une forme trapézoïdale.
